# EUROPEAN PATENT APPLICATION

(11) **EP 0 642 076 A1**
(43) Date of publication of application: **08.03.1995**
(21) Application number: 94305230.8
(22) Date of filing: 15.07.1994
(51) Int. Cl.: G06F 9/44, G06F 3/023

(54) **A data processing system**

(30) Priority: 26.08.1993 GB 9317769
(71) Applicant: International Business Machines Corporation, Armonk, N.Y. 10504 (US)
(72) Inventor: Keogh, Cormac, Dublin 24 (IE)
(74) Representative: Burt, Roger James, Dr.

(57) **Abstract**

The present invention provides a technique for processing data input by a user in an entryfield provided by a user interface of a data processing system. The data processing system has a storage device, an operating system, and a user interface supported by the operating system. The user interface has entryfield objects including entryfield specification data. The system further includes a display means for using the entryfield specification data for a particular entryfield object to display a representation of that entryfield object on a display device, and input means for receiving data input by the user in the entryfield representation. The characteristic features of the system are that it provides comparison means within the entryfield object for checking the input data with a check data stored as part of the entryfield specification data, and processing means within the entryfield object, responsive to the comparison means, for performing one or more predefined processing step when the comparison means indicates that the input data matches the check data, this one or more predefined processing step being defined in the entryfield specification data.

## Description

The present invention relates to a data processing system, and in particular to a technique for processing data input through an entryfield of a user interface provided by such a system.

A user interface can be considered as a software layer supported by an operating system, in some cases the user interface actually being part of the operating system. The user interface provides services to enable or assist program designers to write user interface applications.

Most user interface applications these days are designed to present the user with panels (or windows) in which various elements are arranged. The elements may be in the form of either text, graphics, or 'controls'; 'controls' may be for example pushbuttons, listboxes, entryfields, etc., ie. they are the means by which the user interacts with the user interface application. These type of user interface applications are typically referred to as graphical user interface applications (GUI applications), since the user interfaces used to develop them are typically referred to as graphical user interfaces.

Generally the panels and controls of GUI applications are defined in a similar way to 'objects' in object oriented programming (OOP). OOP is a particular approach to software development which implements required functions by way of 'messages' sent to 'objects'. An 'object' is a software package that contains a collection of 'procedures' and 'data'. A 'message' is a signal sent to an object to request the object to carry out one of its procedures. Hence a message sent to an object will cause a procedure to be invoked to implement the required function.

A panel or a control in a GUI application can hence be considered as a software package that contains a collection of related procedures and data. For example a window object may be defined as an object containing data about the window (size, position, style, type, etc.) along with the various procedures which can be carried out by the window. Typical examples of such procedures would be an initialisation procedure (a series of actions to be performed when the window is created), mouse handling procedures (eg. if the mouse pointer passes over the window then represent the pointer as a hand instead of an arrow), painting procedures (eg. paint the window blue and display a picture of the moon in the background), and application type procedures (eg. when the user hits 'OK' save the data in the panel to disk - when the user hits 'Cancel' don't save to disk, but display a message box to ask "Are you sure?"). These procedures will be invoked by messages sent to the window object to inform that object that an event has occurred, eg. a user has selected a button or actionbar item (such an event might cause an application procedure to be invoked).

GUI applications typically utilise a number of panel and control objects made available by the associated GUI. In addition the GUI application may define new object classes or subclasses which are to be used (a 'class' is a template for defining the procedures and data for a particular type of object - all objects of a given class are identical in form and behaviour but have different data associated therewith). The designer of such an application will generally wish to provide for a situation where, depending on what the user types into an entryfield on a panel, more (or less) functionality will be made available to the user by the performance of an action consisting of one or more predefined processing steps. Since functionality in a GUI application is provided by control objects (ie pushbuttons, listboxes, entryfields, etc.), then typical actions which the designer may want to be performed if the user has entered specific data in the entryfield would be, for example: create, delete, hide, show, disable or enable a particular control object.

In order to provide this feature, the following process will typically be required:
1) Find out when the entryfield contents change;
2) Check the new entryfield data against predefined check data to see if there is a match;
3) If there is a match

THEN perform the required action (eg. Creating/Deleting/Hiding/Showing/Disabling/Enabling a required control object)

Normally, for a GUI application, the above process is written as a subroutine to be performed within the program code of the application. The program designer hence has to program each checking process and corresponding action individually for each entryfield. In other words the programmer will have to write similar, but not quite identical code, for each check in every occurrence of an entryfield of the type where contents should be checked to provide more or less functionality. For this process to operate, the check data must be made available in memory in order that the checking step can be performed. Further, cross references will be required to identify which sets of check data apply to which entryfield. Typically this is done by maintaining a series of buffers which contain the check data; each buffer then needs to be checked against the contents of the appropriate entryfield and the appropriate action(s) performed by direct coding. This whole process generates an undesirable design overhead (ie. because of having to provide for maintaining buffers, checking and performing actions).

Considering that there may potentially be a large number of checks to be performed (eg when there are several entryfields in a panel object, each with a number of different pieces of check data) the designer will typically have to expend considerable effort in order to provide for the management of the check data in addition to the performance of the check routines. This makes things quite difficult and inconvenient for the designer as the above process may need to be carried out every time the contents of the entryfield changes.

It is hence an object of the present invention to provide a technique which alleviates the above described problems.

Accordingly the present invention provides a data processing system comprising: a storage device; an operating system; a user interface supported by the operating system, the user interface having entryfield objects including entryfield specification data; display means for using the entryfield specification data for a particular entryfield object to display a representation of that entryfield object on a display device; input means for receiving data input by the user in the entryfield representation; the system being characterised by: comparison means within the entryfield object for checking the input data with a check data stored as part of the entryfield specification data; and processing means within the entryfield object, responsive to the comparison means, for performing one or more predefined processing step when the comparison means indicates that the input data matches the check data, this one or more predefined processing step being defined in the entryfield specification data.

The present invention provides a technique whereby an entryfield object will inherently perform any extra processing steps required (eg. creating another panel or control object) based on its contents. In other words the entryfield object is linked implicity to another panel or control object and has appropriate check text included in its definition. This arrangement provides a much more efficient way of managing check data and performing the check routines, and removes the overhead associated with the prior art since the buffers no longer need to be maintained. With the present invention the check data and associated actions are specified at the same point when defining the entryfield specification data.

A further problem which the designer of a GUI application may face is as follows. If the required processing steps (to be carried out upon identification of a match condition) need to be modified at any stage then, with prior art techniques, the program code of the GUI application will need to be altered to reflect this, which would in turn mean that recompilation would be required. Depending when this modification takes place the recompiled code may need to be re-shipped to customers. Similar considerations apply if any of the check data hard-coded into the program (as would typically be the case for check data that would not change at run-time) are required to be changed.

With the technique of the present invention, the entryfield specification data (which in the system of the invention includes the data concerning layout of the entryfield, the check data, and data defining the further processing steps (action) to be carried out upon identification of a match) can be supplied to the entryfield object in a number of ways. For instance the entryfield specification data can be provided within the program code of the user interface application program, the entryfield specification data being sent via the user interface to the entryfield object upon creation of that entryfield object. The control data is then stored in a portion of local memory assigned to that entryfield object, and will include the various check data and definitions of the associated actions.

However this technique does not solve the recompilation problem outlined above. Hence, in preferred embodiments of the present invention the entryfield specification data is stored in external files (hereafter called 'resource' files) provided by the storage device, and, upon creation of a particular entryfield object, the corresponding entryfield specification data in the resource file is copied to a memory accessible directly by that entryfield object. Since data stored in resource files does not form part of the user interface application code (ie executable code) this code does not need to be recompiled if the check data or definitions of the associated processing steps is changed at any stage. All that is required is to update the resource file and then re-run the GUI application. Similarly several different resource files could be provided, one for each of a number of different languages (eg English, French, German). Before the GUI application is run, all that is required is to select the appropriate resource file; hence no recompilation is necessary before the various pieces of text appearing in the panels, entryfields, etc. can be presented in a different language.

Typically resource files will not be provided for each control object such as an entryfield object. Instead, in preferred embodiments, there will be one resource file for each user interface application. Hence a resource file will contain the entire definitions of each panel object used by the application, each such definition including all the information about the controls (eg. entryfield(s)) to be included in the panel. Hence the user interface application designer will include the entryfield specification data for a particular entryfield object as part of the definition of the associated panel object in a resource file.

An entryfield object may either have one piece of check data associated therewith, or instead may have several separate pieces of check data associated therewith. In the latter case a match between input data and any one of the pieces of check data could cause the predefined processing steps to be performed, or indeed each piece of check data could indicate different processing steps to be performed. When there are several possible checks for a particular entryfield, the entryfield specification data will include a plurality of separate check data and definitions of the predefined processing steps associated with each separate check data.

Further the check data may consist of a specific piece of data against which the input data is to be checked, eg. a particular word such as "LONDON", or alternatively the check data may define a particular format against which the input data is to be checked, eg "@@####" where @ = any alphabetic character and # = any numeric character. This latter form of check data will be referred to hereafter as a 'wildcard'.

Viewed from a second aspect the present invention provides a method of processing data input by a user in an entryfield provided by a user interface of a data processing system, the user interface having entryfield objects including entryfield specification data, the method comprising the steps of: for a particular entryfield object displaying, having regard to its entryfield specification data, a representation of the particular entryfield object on a display device; receiving data input by the user in the entryfield representation; the method being characterised by the steps of: employing the entryfield object to check the input data with a check data stored as part of the entryfield specification data; and further employing the entryfield object to perform one or more predefined processing step when the checking step indicates that the input data matches the check data, this one or more predefined processing step being defined in the entryfield specification data.

The present invention will be described further, by way of example only, with reference to an embodiment thereof as illustrated in the accompanying drawings, in which:
Figures 1 and 2 are flow diagrams illustrating the processing steps carried out as part of a typical prior art window procedure forming part of the program code of a GUI application;
Figure 3 is a block diagram of the data processing system of the preferred embodiment;
Figure 4 is a flow diagram illustrating the process steps carried out by the data processing system of the preferred embodiment in order to process entryfield data; and
Figure 5 is a representation of an entryfield object of the preferred embodiment of the present invention as it appears on a display screen at different points in time.

For the purposes of the preferred embodiment we will consider an IBM GUI called Presentation Manager (PM). However the technique is equally applicable to any other GUIs such as Microsoft Windows, X-Windows Motif or Apple Macintosh.

When defining an application panel to run on PM (or other GUIs) the designer can create a resource file as mentioned above. In this file the designer will usually define the coordinates and appearance of the panel along with the control objects (eg entryfields, buttons) to be located within the panel.

However, in order to provide the management of check data and the performance of the check routines a designer would, using the prior art technique, write a window procedure within the body of the program code forming the GUI application; the window procedure may also provide other additional routines. There will also be a declaration section in the program in which the designer will declare the buffers in which the check data will be stored. An example of the necessary portion of the window procedure (written in C language) and the declaration section that would be needed to manage the check data and perform the check routines for a particular panel is included below:
(This example assumes that the panel object has 5 entryfields and that:
the first entryfield has 2 possible search strings stored in the char buffers - srchdatalentryl and srchdata2entry1;
the second entryfield has 1 possible search string stored in the char buffet - srchdatalentry2;
the third entryfield has 2 possible search strings stored in the char buffers - srchdatalentry3 and srchdata2entry3;
the fourth entryfield has 1 possible search string stored in the char buffer - srchdatalentry4; and
the fifth entryfield has 3 possible search strings stored in the char buffers - srchdatalentry5,
srchdata2entry5, srchdata3entry5.

### Sections of C code concerned with checking Entryfield contents and performing actions based on those contents.

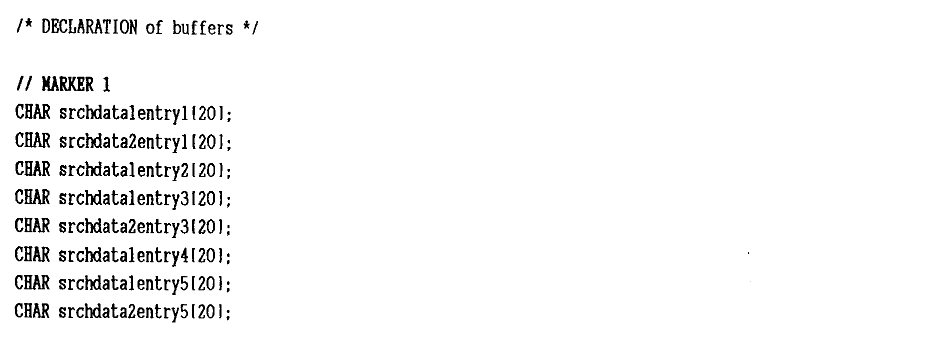

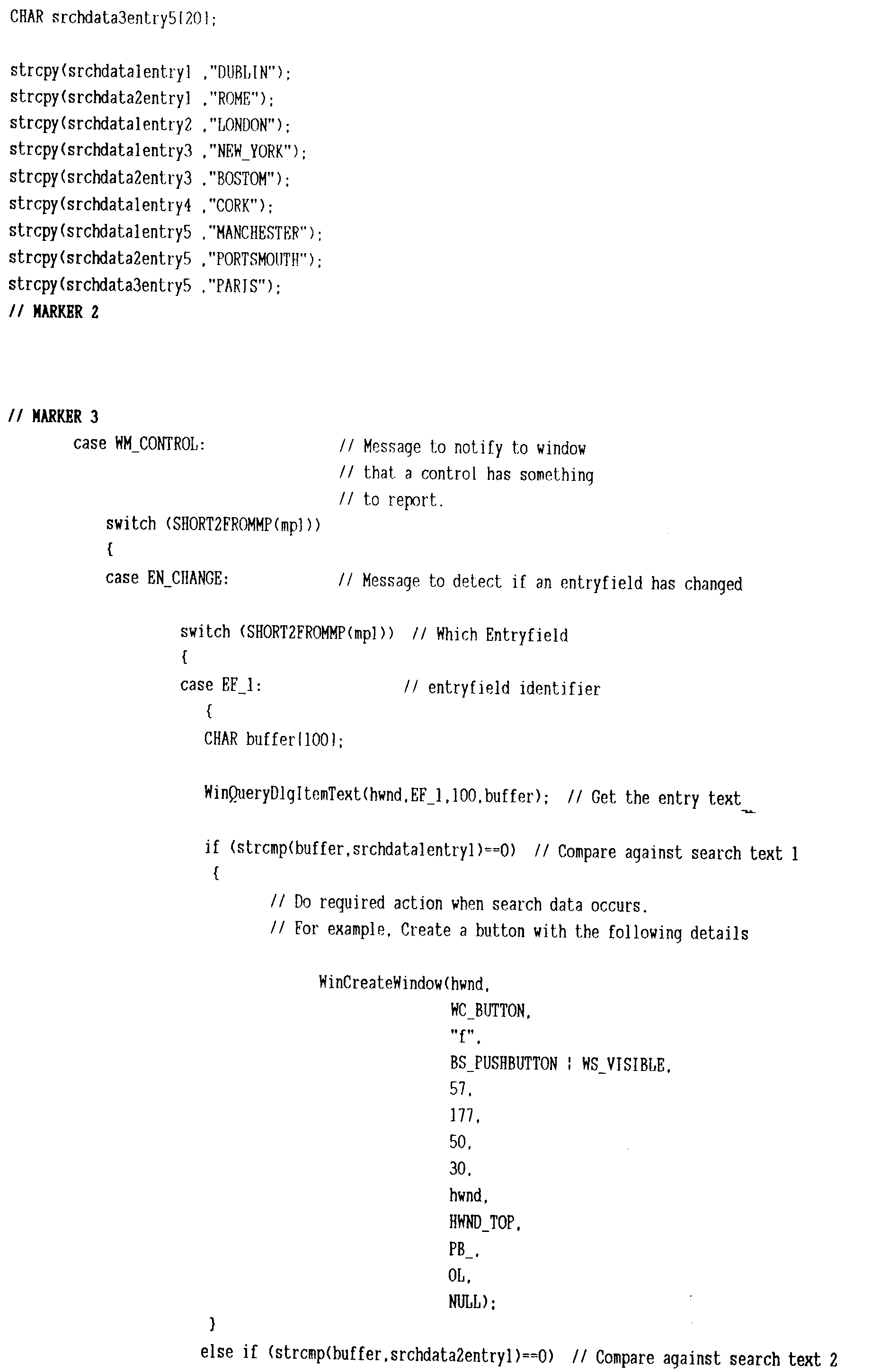

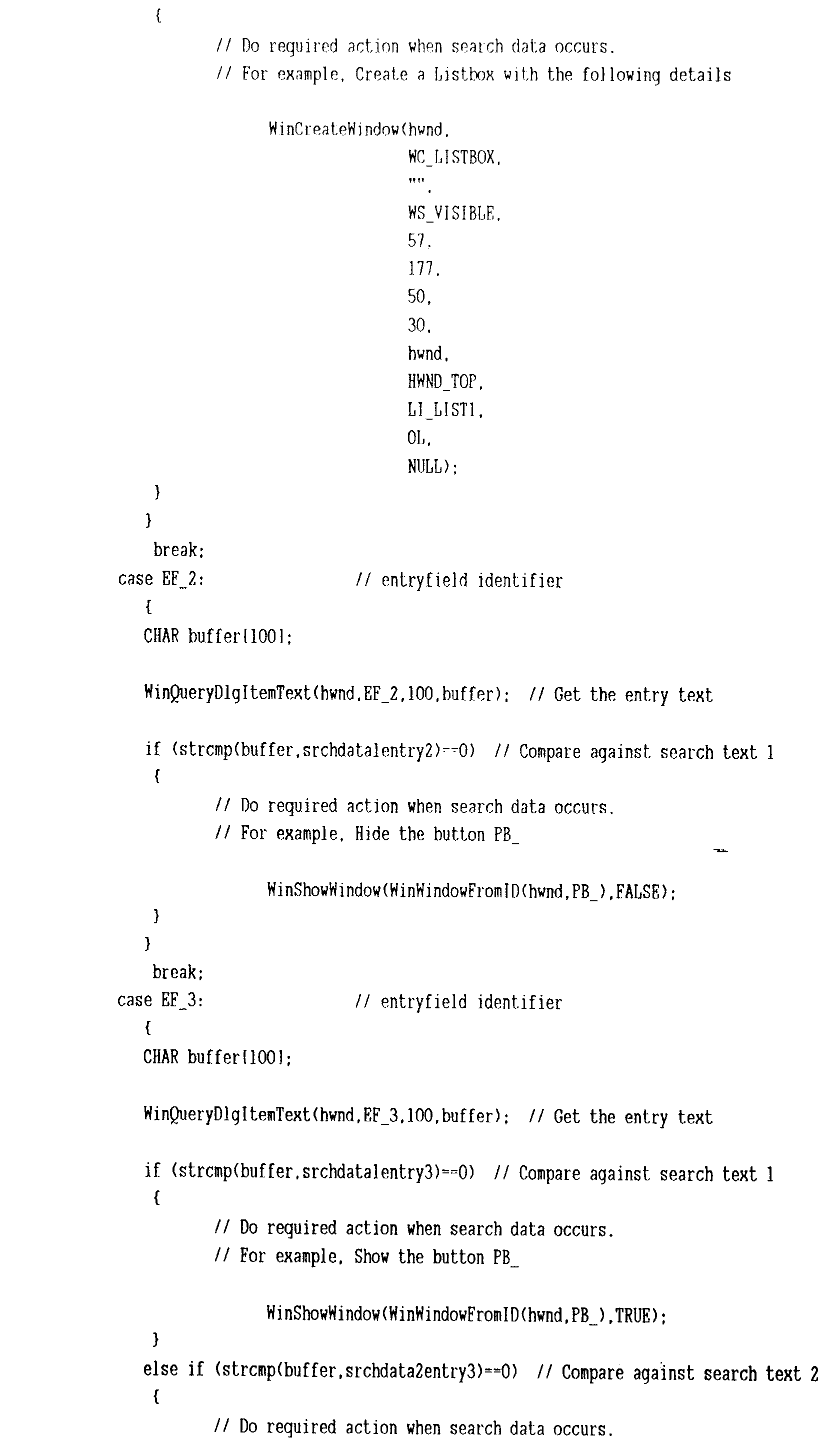

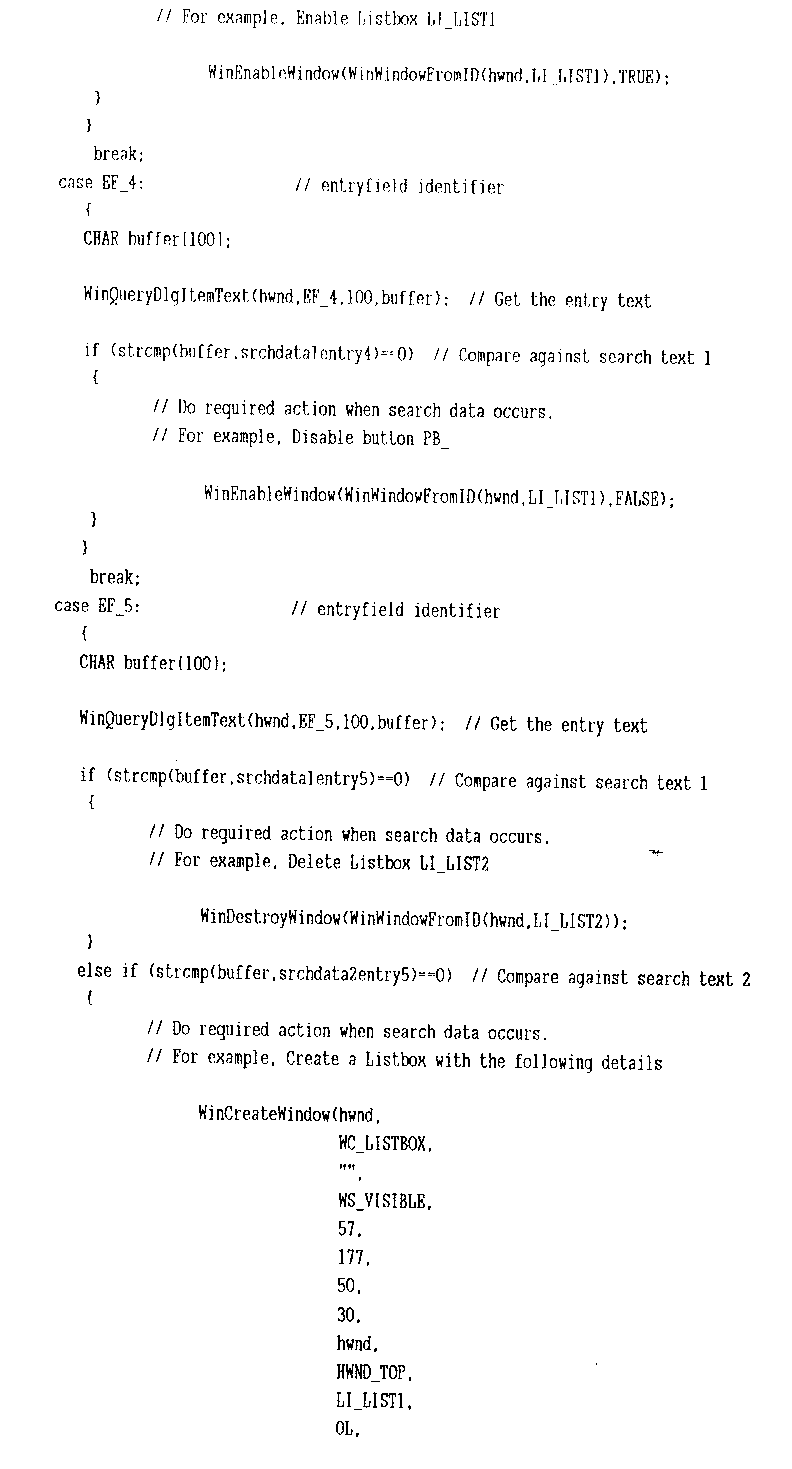

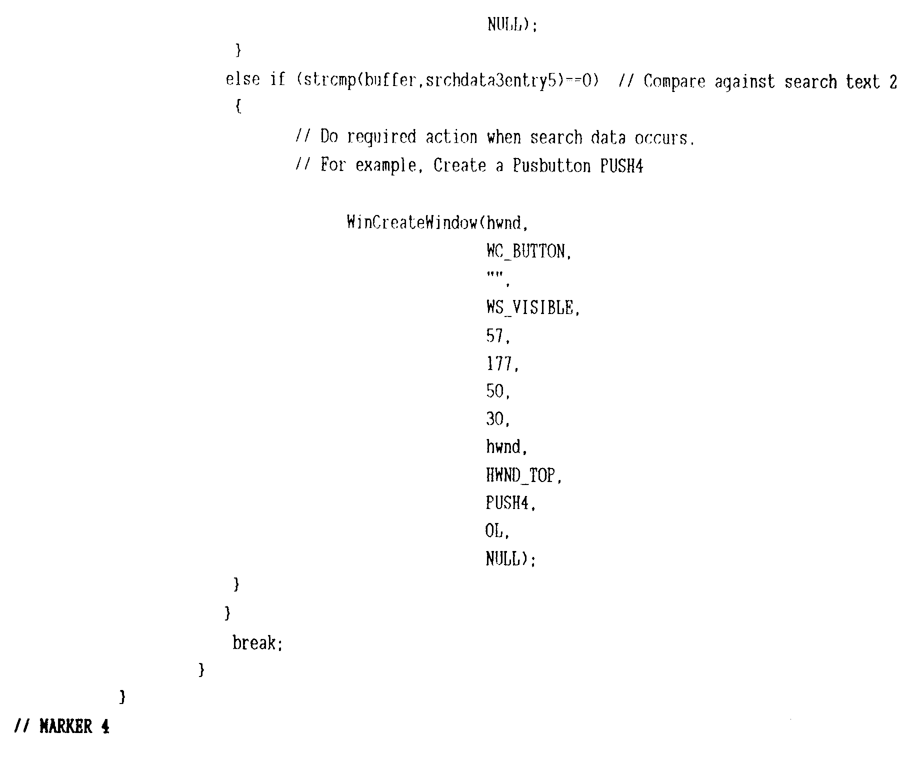

When using GUI application code such as that used above, the contents of the resource file describing the panel would typically be as follows:

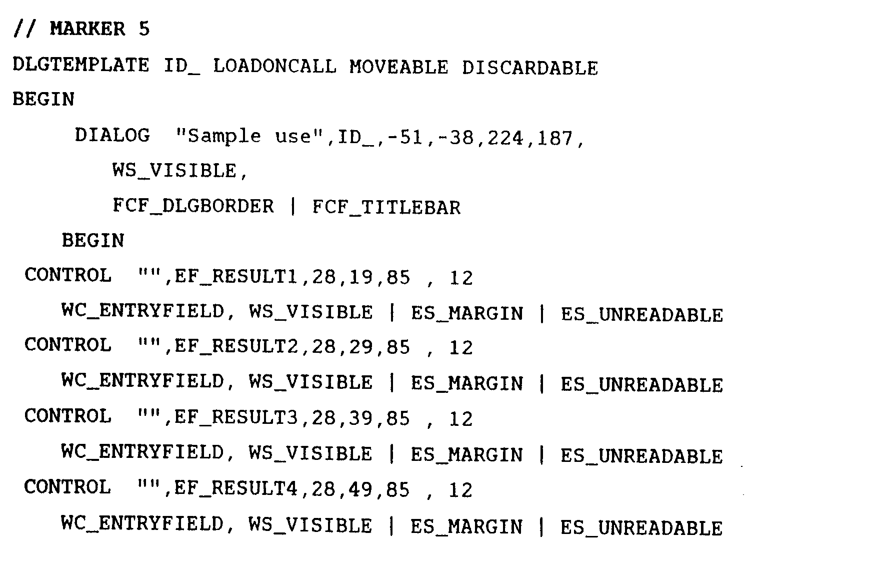

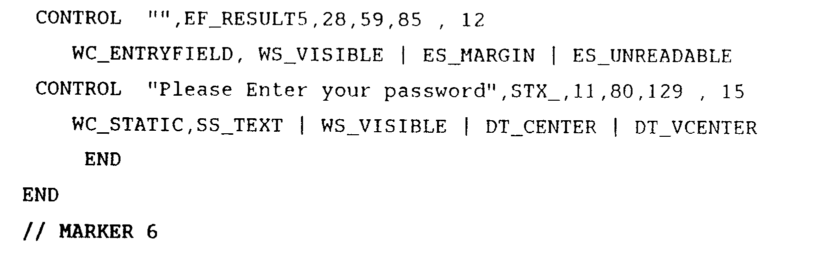

The terms used in the above resource file description have the following meanings:
DLGTEMPLATE is a command indicating that the code to follow is a specification of a panel;
ID_ is the ID of the panel being specified;
LOADONCALL, MOVEABLE, DISCARDABLE are three different loading options by which the information about the panel can be loaded in to memory - for the purpose of understanding the present invention these terms are not relevant;
DIALOG is a command specifying a panel, the title of the panel in this case being "Sample Use", and the subsequent numbers being the panel's coordinates;
WS_VISIBLE, FCF_DLGBORDER, FCF_TITLEBAR are three standard panel attributes indicating that the panel should be visible, have a particular border, and have the title included;
CONTROL is a command defining a control object (eg entryfield) to be included within the panel - "" indicates that no default text is to be placed in the control, EF_RESULT1 is the control ID, and the following four numbers are the coordinates of the panel;
WC_ENTRYFIELD tells us that the control (eg. EF_RESULT1) is actually a standard entryfield object as defined by PM, and the next three statements are attribute statements for this control object.

Hence it will be apparent that the resource file listed above defines a panel with five entryfields and one static text field.

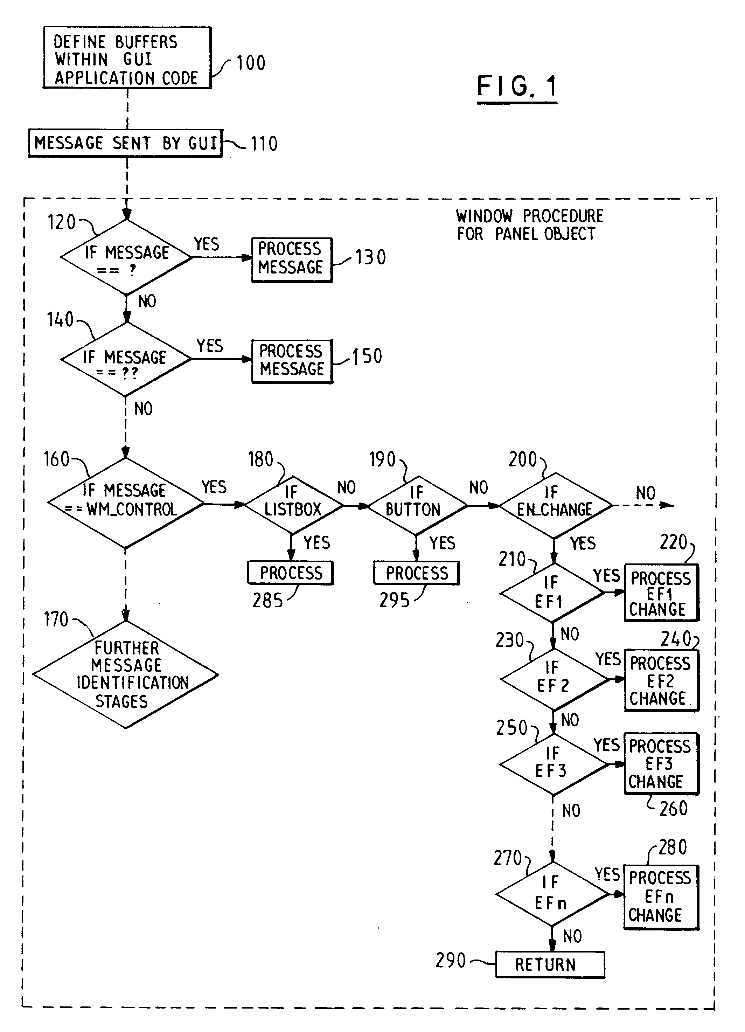

To aid understanding of the GUI application code listed above, we will now consider the flow diagram of Figure 1 which illustrates the processing steps carried out by the window procedure generally, and by the program code listed above in particular. At step 100 a series of buffers are defined within the GUI application code, the various pieces of check data then being stored in these buffers. The code which generates these buffers will typically be separated from the window procedure code by many other lines of code.

At some stage during the operation of the GUI application an event will occur which will cause the GUI (in this case PM) to send a message to a particular panel object (step 110), such an event being for instance the typing of a character into an entryfield by a user. Once this occurs the window procedure will be activated. The first part of the window procedure involves determining the type of message that has been sent (steps 120, 140, 160, 170). If a certain message type is identified then an associated procedure of the panel object (or one of its control objects) will be performed (eg. steps 130, 150).

If the message is stating that one of the panel's control objects has something to report (in PM such a message is called a "WM_CONTROL" message), then that message will be identified at step 160. If the WM_CONTROL message is identified at step 160 then the next stage is to decide which type of control object has something to report. For example the control object in question may be a listbox, a button, an entryfield, etc. If, for example, the control object is a listbox it will be identified at step 180, and then the necessary subsequent processing step will be performed at step 285. These subsequent processing steps will be defined in more detail for the situation where the control object is identified as an entryfield (step 200). The identification of the PM message "EN_CHANGE" at step 200 will indicate that a change has occurred within an entryfield. Hence the next stage is to identify which entryfield (there may be more than one in a particular panel) is involved.

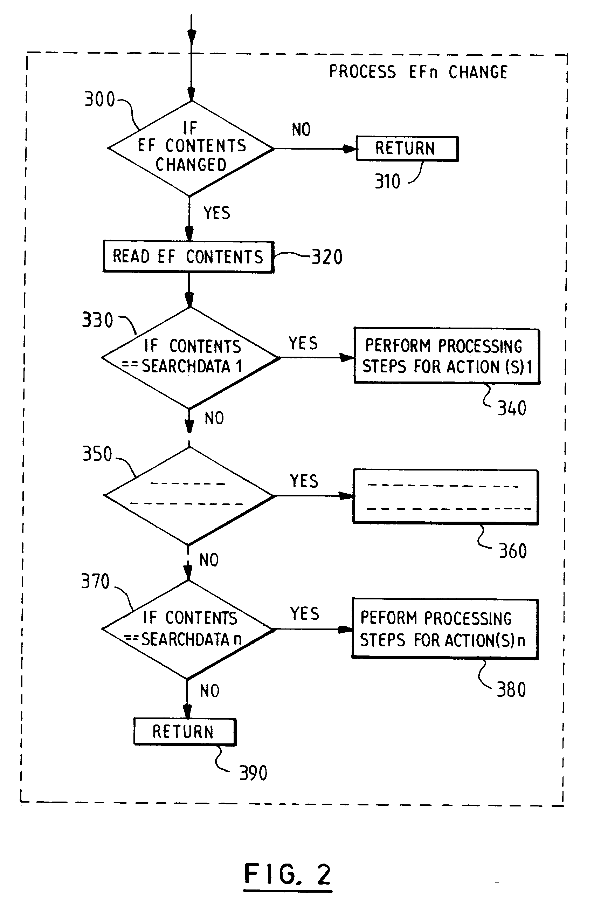

At steps 210, 230, 250, 270 checks are made to see which entryfield ID matches the entryfield ID included in the message from the GUI. Once the entryfield ID has been matched the change in the entryfield can be processed (steps 220, 240, 260, 280). If the entryfield ID included in the GUI message is not matched at any of steps 210, 230, 250, 270 then the window procedure returns to the GUI (PM); this scenario might occur if the entryfield in question was one where the contents do not need to be checked. Step 280 (which is the equivalent of steps 220, 240, or 260 but for the nth entryfield) will be described in more detail with reference to Figure 2.

Firstly at step 300 a check is made to see if the entryfield contents have indeed changed. If they have not then the process returns to the GUI. If they have then the process moves to step 320 where the new entryfield contents are read. At step 330 the contents of the entryfield are checked against the first piece of check data ("searchdatal"). If the contents match the check data then the processing steps defined by the action(s) associated with the first piece of check data are performed (step 340). If the first check data does not match then the new entryfield contents are checked against each other piece of check data in turn (steps 350, 370), associated actions being performed wherever there is a match detected (steps 360, 380). If there is no match after all the entryfield contents have been checked against all the check data then the process returns to the GUI (step 390).

As will be apparent the above procedure described with reference to figures 1 and 2 is quite complex. With the technique of the preferred embodiment of the present invention, the designer no longer needs to include the code between MARKERs 1 and 2 and between MARKERs 3 and 4 in the executable GUI application code listed earlier. This is because the information provided between markers 1 and 2 is stored as part of the entryfield specification data in the appropriate resource file, and the logic defined between markers 3 and 4 is provided by procedures belonging to the entryfield object. In effect the designer establishes a new type of entryfield object having the necessary extra procedures (which will hereafter be referred to as an 'extended entryfield object') and then provides for the entryfield specification data to include all the necessary data concerning check data and the processing steps to be performed when certain check data is matched by user input data. These steps will now be described in more detail below.

The first step which the GUI application designer has to perform is the creation of a new entryfield class (hereafter referred to as the "Extended entryfield" or "EEF"). This can be done by sub-classing from the standard entryfield object provided by the GUI. In the preferred embodiment the EEF object is set up to include all of the procedures of the standard PM entryfield object. However a couple of the procedures are modified, and a couple of extra procedures are added. These are described in more detail below.

In the preferred embodiments three of the messages/procedures provided by the standard PM entryfield object are altered, namely the WM_CREATE, WM_CHAR, and WM_CLOSE messages/procedures. Further two new messages/procedures are defined, namely EEM_SETCHECKDATA and EEM_CHARRECEIVED. In the EEF object these five messages/procedures take the following form:
**WM_CREATE message/procedure**
This is an initialisation message sent immediately after creation of an object and before that object is visible by PM, so that the object can initialise itself. The creation itself is actually performed by PM using that part of the entryfield specification data that defines the layout of the entryfield. For the subsequent discussion this particular part of the entryfield specification data will be called the 'layout data', and the remaining parts (ie. check data plus data defining the further processing steps (action(s)) will be called 'control data'.
Upon receipt of this message by the EEF object the following procedure is carried out:
1) Read control data;
2) Send EEM_SETCHECKDATA (synchronous) message to itself (see description below of this message) passing the control data as a parameter.

### EEM_SETCHECKDATA message/procedure

This is a message sent to the EEF object to set the check data in the entryfield.
In response to this message the following procedure is carried out:
1) Read control data.
2) Allocate memory to copy control data.
3) Copy the control data into allocated memory.
4) Store pointer to allocated memory for later use.

### WM_CHAR message/procedure

This message is sent when the user types data into the field. The OS and PM interpret the keyboard, etc. and send the message to the EEF object.
In response to this message:
1) the EEF object calls the equivalent PM procedure (ie. the WM_CHAR procedure of the standard entryfield class WC_ENTRYFIELD);
2) IF the EEF object has the attribute EES_AUTOCHECK (discussed below) selected (basically this attribute means that checking should occur each time contents change) THEN the EEF object sends an EEM_CHARRECEIVED message (asynchronous) to itself in order to check the entryfield contents.

### EEM_CHARRECEIVED message/procedure

This message provides a notification that the EEF contents may have changed.
In response to this message the EEF performs the following procedure:
1) Get access to check data;
2) Check to see if its contents have changed;

If YES
Query Text
Loop through search texts and check
If a match is detected
Perform action(s) against other object ID(s) as specified in the entryfield specification data
If NO
ignore
If NO
ignore
NOTE: If the EES_AUTOCHECK attribute has not been set in the EEF then the application designer may want to specify when the EEM_CHARRECEIVED message should be sent to the EEF to tell it to perform the checking. For instance when an 'OK button' is pressed on the panel this message might be sent to tell the EEF to check and perform any appropriate actions.

### WM_CLOSE

This is a message sent by PM to the EEF object when it is being destroyed so that it can clean up.
In response to this message the EEF object does the following
1) It frees memory allocated to it.
This WM_CLOSE procedure is different to the standard entryfield 'close' procedure since the standard one knows nothing about the extra memory allocated for the control data by the EEM_SETCHECKDATA procedure (see above).

As mentioned above a new entryfield attribute is also preferably defined to enable checking to occur as soon as a character is entered in the entryfield (ie. "EES_AUTOCHECK"). If the EEF has this attribute or style then each time the entryfield contents change they will be checked against the checkdata. If the EEF does not have this attribute it will only perform the checking (and actions) when the designer has provided for the EEM_CHARRECEIVED message to be sent to the EEF. The EES_AUTOCHECK attribute is specified by the designer as part of the entryfield specification data in the resource file. The actual consequence of an EEF object having the EES_AUTOCHECK attribute is defined in the WM_CHAR procedure described above.

Having created the extended entryfield object class the designer will then have to define the entryfield specification data. The extra data needed for use by the Extended Entry field object can be described via the CTLDATA statement in the PM resource script. Basically the PM command CTLDATA is a means of specifying some extra data to be passed to a control object (as defined by the previous CONTROL command) when that control object is being created. The syntax used is as follows:
CTLDATA"searchtext,a,cid,a,cid,a,cid,a,cid,a,cid;searchtext,a,cid,a,cid;"
- searchtext =: the text to search for (including wildcards if they are used).
- , =: a separator
- a =: action code - possible values could be :
C for create
D for delete
H for hide
S for show
E for enable
I for disable
- , =: separator
- cid =: control id - the identifier of the control object to be acted upon by the action identified by the preceding action flag. The meanings of the various action flags (C, D, etc) are provided by the EEM_CHARRECEIVED procedure (described above).

A searchtext followed by one or more "a,cid" pairs defines a set of checkdata. More than one set of checkdata can be associated with one Extended Entry field object. Each set will be separated by a ';'. For example consider the following CTLDATA statement:
CTLDATA "MANCHESTER,D,LI_LIST2;PORTSMOUTH,C,LI_LIST1;PARIS,C,PUSH4"

If this were the control data line of an extended entryfield object, then the following checking routines could occur:
if "MANCHESTER" was entered into the entryfield the control LI_LIST2 would be deleted;
if "PORTSMOUTH" was entered into the entryfield the control LI_LIST1 would be created; and
if "PARIS" was entered the PUSH4 control would be created.

Hence in the preferred embodiment of the present invention, if it was desired to define a panel functionally equivalent to the one described earlier with reference to the prior art code and resource file, the resource file would now include the following description:

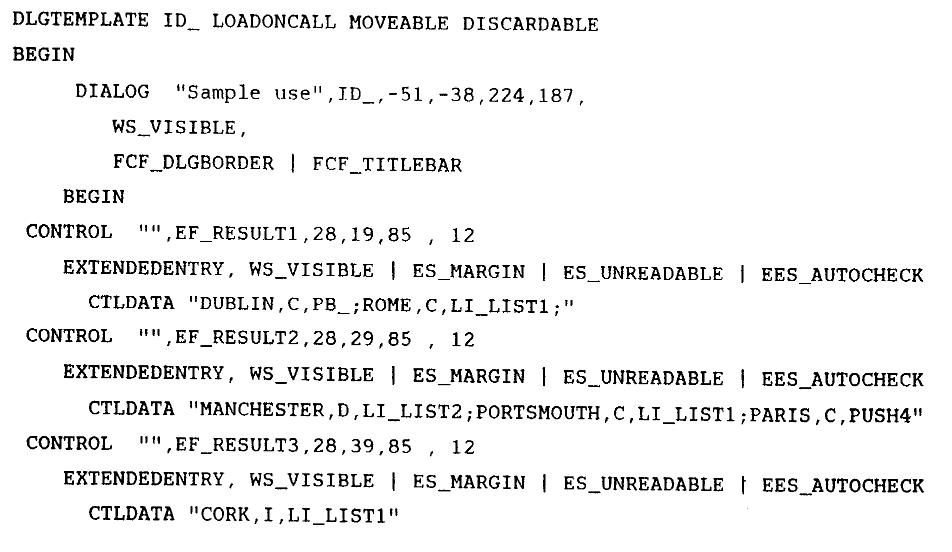

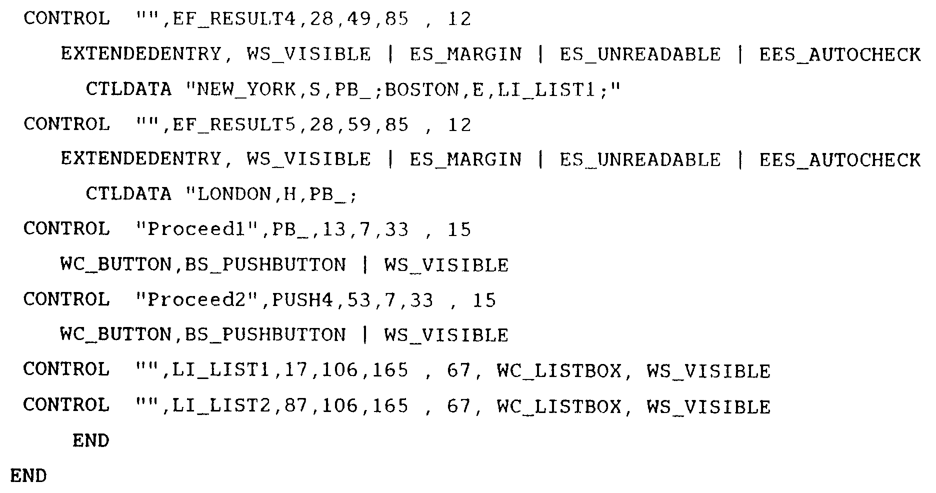

If this is compared with the previous resource file description listed between markers 5 and 6, it will be apparent that the differences are as follows:
the object type EXTENDEDENTRY is used to define the entryfield objects rather than the standard type WC_ENTRYFIELD. EXTENDEDENTRY is the new object class having the procedures as described earlier;
each entryfield has been given an extra attribute "EES_AUTOCHECK" - as described earlier this means that the entryfield contents are checked each time they change;
each control object definition includes a CTLDATA line - as described earlier this command provides extra data to be sent to the EEF when it is created.

If these CTLDATA lines are compared with the data placed in the buffers of the prior art and the actions defined by the prior art GUI application code (see code between markers 1 and 2 and markers 3 and 4 in the prior art GUI application code listed earlier) it will be apparent that they provide exactly the same check data and actions.

The last four CONTROL commands give the specification details for the control objects that may be acted upon by the EEF objects defined above.

To actually make use of the extended entryfield object described above the designer of the GUI application designer must do the following. Firstly the designer is no longer required to provide the program code illustrated earlier between markers 1 and 2 and between markers 3 and 4. The designer will however need to add a line of code into the GUI application code in order to register the Extended Entry Class that he has created. This should be added before the message loop in the program code. With PM this registering of the EEF can be achieved by calling the function "RegisterExtEntry(hab);"; an equivalent to these registering calls can be provided in other GUIs. This identifies the new class to PM which allows the designer to then create instances of the class.

These instances will preferably be created via the CONTROL statement in the resource file. However an alternative approach is for the designer to specify the entryfield specification data in the GUI application code as part of an appropriate API call in the code. In PM the appropriate API call is called "WinCreateWindow", and the class name would be "ExtendedEntry". When this call is made to PM, PM will generate a message and send it to the EEF object, giving it details of the entryfield control data as defined in the GUI application code. The disadvantage of using the API route instead of defining the entryfield specification data in the resource file is that, if any part of the entryfield specification data requires alteration at any time, the GUI application code will need to be altered and then recompiled, since it is in the GUI application code that the relevant information is contained if the former approach is used. This is not the case if the entryfield specification data is stored in the resource file, and so the with the resource file approach the recompilation problem disappears.

To summarise the current approach the designer will use all the previous GUI application code that he would have used with the prior art approach, except that he will not provide any of the code between MARKERs1 and 2 or between MARKERs 3 and 4. Instead he will add one line in order to register the new EEF object class with PM.

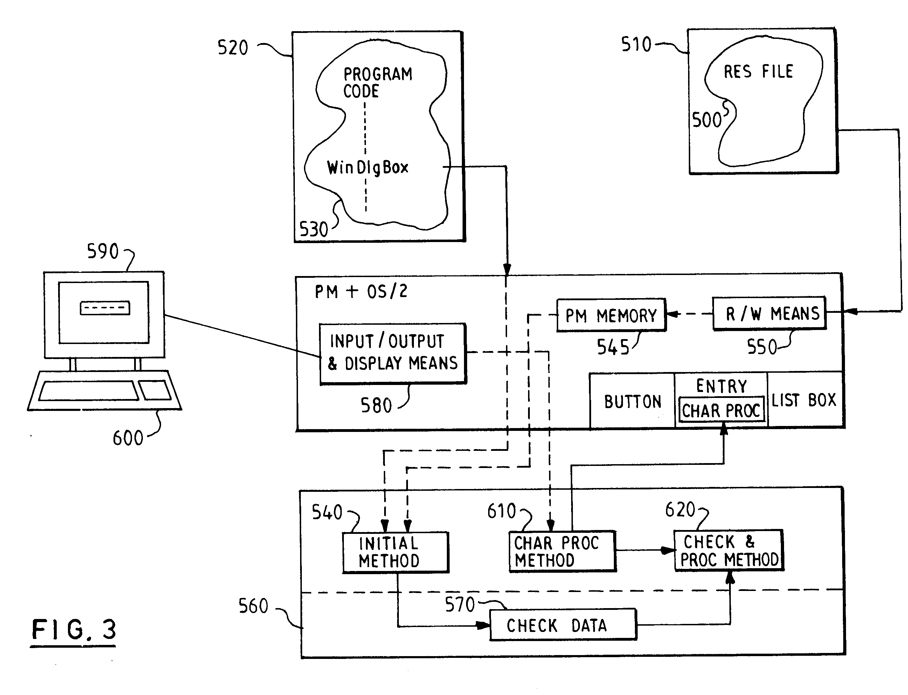

The preferred embodiment of the present invention will now be described in use with reference to the block diagram of Figure 3. The entryfield specification data is stored in resource file 500 located in the storage device 510. When the GUI application is run the read/write means 550 is requested to copy the resource file into PM memory 545.

The GUI application 520 consists of a piece of program code 530. At some point in this code the API call "WinD1gBox" will appear to indicate that a panel object should be created. PM receives this call and then creates this panel using the relevant information in the PM memory 545. Additionally all of the control objects contained within the panel object need to be created by PM. Once this is done PM sends WM_CREATE messages to the newly created control objects. Each WM_CREATE message will include a pointer to a portion of the PM memory 545 in which the relevant control data is contained. Upon receipt of a WM_CREATE message a particular control object will invoke an initialisation procedure 540. For an EEF object this initialisation procedure will involve running the WM_CREATE and EEM_SETCHECKDATA procedures described earlier. As part of this procedure the relevant control data will be accessed from the PM memory 545 using the pointer provided and will be stored in a piece of local memory accessible by the EEF object 560.

This EEF object 560 will then at some point be displayed by the display means 580 on the display screen 590. When the user of the GUI application enters characters in the entryfield via keyboard 600, the input/output means 580 will receive details of those characters. This will trigger PM to send the WM_CHAR message described earlier to the EEF object, the EEF then calling the standard character processing procedure 610 defined in the standard PM entryfield (WC_ENTRYFIELD). If the EES_AUTOCHECK attribute has been chosen, then the checking procedure 620 will automatically be invoked. This procedure is the EEM_CHARRECEIVED procedure described earlier. It accesses the check data, performs the various checks, and performs any necessary actions when the new entryfield data matches any of the pieces of check data.

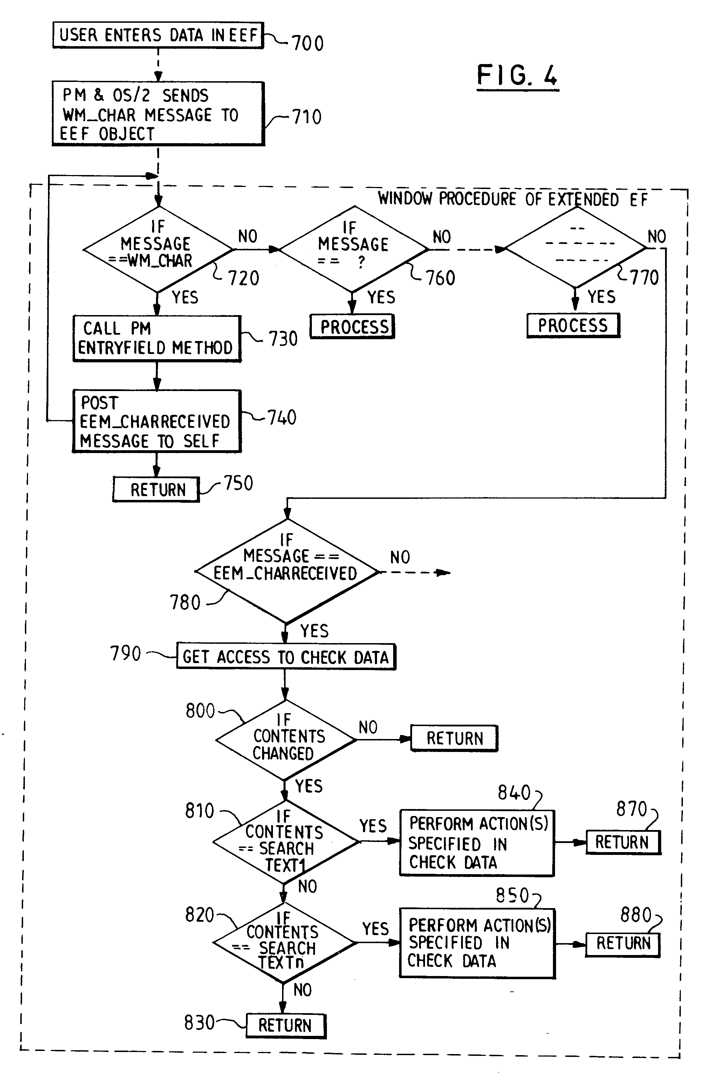

The above described processing steps will be further described with reference to the flow diagram in figure 4. In the process of Figure 4 it is assumed that the EEF object in question has the EES_AUTOCHECK attribute selected. At step 700 the user enters data in an EEF object. This results at step 710 in PM and OS/2 sending the WM_CHAR message to this EEF object. The EEF then performs a WM_CHAR procedure which forms part of the EEF window procedure. At step 720 the process checks if the message received by the EEF object is in fact a WM_CHAR message. If it is then at step 730 the standard entryfield character processing procedure is invoked. Further at step 740 the EEF sends a EEM_CHARRECEIVED message to itself, and then the WM_CHAR procedure terminates at step 750.

Since an EEM_CHARRECEIVED message was generated the process returns to step 720. This time the message is not a WM_CHAR message so the process moves on to steps 760, 770, 780. At each of these steps it is determined whether the message in question is a particular type of message. At box 780 it is determined that the message is a EEM_CHARRECEIVED message. This being so the EEM_CHARRECEIVED procedure is invoked whereby, at step 790, the check data 570 is accessed. At step 800 it is determined whether the contents of the EEF have changed, and if so the new contents are checked against the various pieces of check data (searchtextl, ... searchtextn, etc) at steps 810, 820. If the entryfield data matches the check data then the associated action(s) are carried out at step 840, 850. Once the actions have been performed, or no match has been found with any of the check data, then the procedure terminates and returns processing to the caller, ie PM.

It is becoming more common these days for GUI tools to be developed to assist a designer in developing GUI applications. Hence the Extended Entryfield object class as described above could be provided as part of a software tool for the GUI application designer to then use. The RegisterExtEntry function and the procedures of the EEF object can be made available to the designer in a number of different ways. For instance they can be made available in a static library, an object file, a dynamic link library (DLL), or in the source code level. With the EEF object defined all the GUI application designer has to do is set the internal check data.

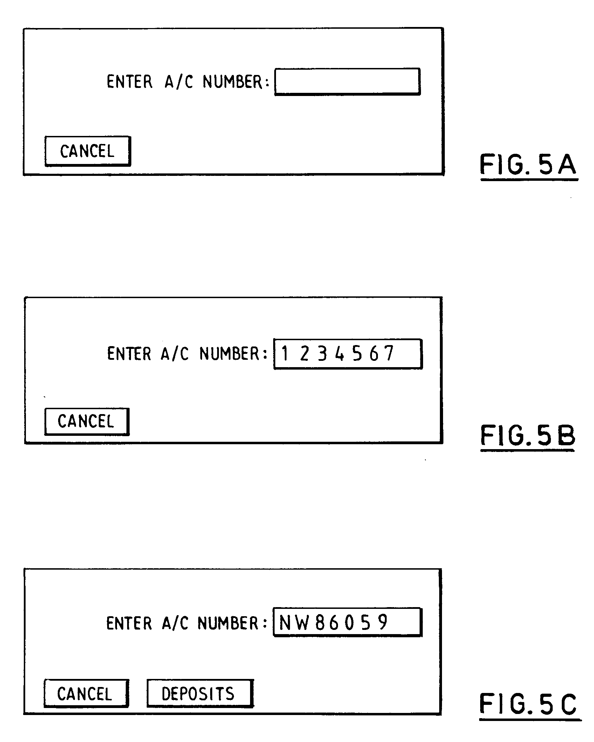

As an example of how the EEF object might appear to the user, consider Figures 5a to 5c. Figure 5a shows the representation of an example EEF object on the display screen 590 before any characters are entered by the user. If the user enters the incorrect account number then only the cancel button is selectable (see figure 5b). However if the correct account number is entered then a further button object is created in the panel for the user to select (see figure 5c). What has happened is that the correct data has initiated a check procedure within the EEF object which has resulted in extra functionality being presented to the user. This entire process has been performed within the EEF object itself, the EEF object inherently creating the desired extra functionality.

As another example, the EEF object could be used as a password entryfield. In PM an entryfield can have the style ES_PASSWORD which makes the text entered invisible. A panel might be designed with such an entryfield and a cancel button. If the entryfield was an EEF object a "Proceed" button could be created by the entryfield if the correct password was entered. If the correct password was not entered all the user is allowed do is "Cancel".

The check data in the above examples could consist of a number of specific strings of characters and numerals. Alternatively wildcards could be used in order to make the check data even more flexible. For example, consider the situation where:
# is used to represent all numeric characters
@ for all alphabetic characters
? for any character
* for any number of any characters.
The check data @@@##### will be satisfied when the following data is entered by the user :
ABC12345
REG39576
FGH54765
but not for :
ABCDGOHK
23454578
ABCD4376
The check data A* will be satisfied when the following data is entered by the user :
ABC12345
A223
AFDFGJ
but not for :
BTGOHK
2A78
RBD4376

From the above description, it is clear that the data processing system of the preferred embodiment has a number of advantageous features:

All the necessary information and logic required to query contents, check and perform the required actions is contained within the entryfield object itself, thereby simplifying the task of the designer using this EEF object. There is no longer a need to cross reference check data and actions with individual entryfields. In the preferred embodiment the check data is initialised by means of the CTLDATA command in the resource file.

The check data can be used to provide one or more actions based on the EEF contents. Further, more than one set of check data can be provided in each instance of an EEF object.

The check data can be altered after creation by sending the new check data with an EEM_SETCHECKDATA message to the EEF object. This may totally modify the behaviour of the extended entryfield. The EEM_SETCHECKDATA message would be sent from the program code and would therefore still have the recompilation problem of the prior art.

By using the EES_AUTOCHECK attribute, the entryfield does all the checking and window/control creation automatically as the contents change.

Wildcards can be used in the definition of the checktext, eg. @@###### might specify that a valid bank a/c number has been entered. @ = any alphabetic, # = any numeric.

By storing the entryfield specification data in resource files, that data can be updated without recompiling the program code. Further this technique simplifies the management of data since it is all contained in one place.

## Claims

1. A data processing system comprising:
a storage device;
an operating system;
a user interface supported by the operating system, the user interface having entryfield objects including entryfield specification data;
display means for using the entryfield specification data for a particular entryfield object to display a representation of that entryfield object on a display device;
input means for receiving data input by the user in the entryfield representation;
the system being characterised by:
comparison means within the entryfield object for checking the input data with a check data stored as part of the entryfield specification data; and
processing means within the entryfield object, responsive to the comparison means, for performing one or more predefined processing step when the comparison means indicates that the input data matches the check data, this one or more predefined processing step being defined in the entryfield specification data.

2. A data processing system as claimed in Claim 1, wherein the entryfield specification data is represented in the storage device by resource files and, upon creation of the particular entryfield object, the corresponding entryfield specification data in the resource file is copied to a memory accessible directly by that entryfield object.

3. A data processing system as claimed in Claim 1 or Claim 2, wherein the entryfield specification data is provided within program code of a user interface application program, the entryfield specification data being sent via the user interface to the entryfield object upon creation of that entryfield object.

4. A data processing system as claimed in any of claims 1 to 3, wherein the entryfield specification data includes a plurality of separate check data and definitions of the predefined processing steps associated with each separate check data.

5. A data processing system as claimed in any preceding claim, wherein the check data may consist of a specific piece of data against which the input data is to be checked.

6. A data processing system as claimed in any preceding claim, wherein the check data may define a particular format against which the input data is to be checked.

7. A method of processing data input by a user in an entryfield provided by a user interface of a data processing system, the user interface having entryfield objects including entryfield specification data, the method comprising the steps of:
for a particular entryfield object displaying, having regard to its entryfield specification data, a representation of the particular entryfield object on a display device;
receiving data input by the user in the entryfield representation;
the method being characterised by the steps of:
employing the entryfield object to check the input data with a check data stored as part of the entryfield specification data; and
further employing the entryfield object to perform one or more predefined processing step when the checking step indicates that the input data matches the check data, this one or more predefined processing step being defined in the entryfield specification data.

8. A method as claimed in Claim 7, further comprising the steps of:
representing the entryfield specification data in resource files provided by a storage device; and
upon creation of the particular entryfield object, copying the corresponding entryfield specification data in the resource file to a memory accessible directly by that entryfield object.

9. A method as claimed in Claim 7 or Claim 8, further comprising the steps of:
providing the entryfield specification data within program code of a user interface application program; and
sending the entryfield specification data via the user interface to the entryfield object upon creation of that entryfield object.

10. A method as claimed in any of claims 7 to 9, wherein the entryfield specification data includes a plurality of separate check data and definitions of the predefined processing steps associated with each separate check data.
